# EUROPEAN PATENT SPECIFICATION

(11) **EP 0 722 878 B1**
(45) Date of publication and mention of the grant of the patent: **07.06.2000**
(21) Application number: 95850208.0
(22) Date of filing: 27.11.1995
(51) Int. Cl.: B62D 5/04

(54) **Steering for lifting truck**
Lenkung für einen Gabelstapler
Direction pour un chariot élévateur

(30) Priority: 28.11.1994 SE 9404119
(43) Date of publication of application: 24.07.1996
(73) Proprietor: BT Industries Aktiebolag, S-59581 Mjölby (SE)
(72) Inventor: Svensson, Rune, S-590 20 Mantorp (SE); Stenberg, Kurt-Ove, S-595 44 Mjölby (SE); Précenth, Gert, Mjölby (SE)
(74) Representative: Berglund, Erik Wilhelm

(56) References cited:
- US-A- 5 172 785
- US-A- 5 181 173
- US-A- 5 347 458

## Description

This invention is related to a steering system for lifting trucks where the steering angle movement for the truck wheel or wheels in relation to the steering wheel movement at low speed is greater than at high speed with a continuous transition between the different gearings or translations as a function of the speed, furthermore the given functional relationship between steering wheel deflection and angular movement of the wheel change between different reaction levels, for instance corresponding to the skill of the user so that for instance a more skilled driver may have a generally higher gearing.

For lifting trucks several different types of steering are known. Mechanical steering requires much force and many steering wheel revolutions to keep the steering wheel forces on a reasonable level, for instance 10 revolutions for 180° turning of the steered wheel or wheels. As a result a large steering wheel is necessary, which gives large steering wheel movements and high required forces and speed for the arm movements. Mechanical steering is therefor not used on modern machines.

Hydraulic servo assisted steering requires somewhat less steering wheel forces and less steering wheel revolutions, about 4 - 6 steering wheel revolutions between full steering to the left and right. Also here a large steering wheel is needed, to serve as emergency steering at a possible servo brake down. Also here comparatively large steering movements result.

Electrically servo assisted steering has the same advantages and disadvantages as hydraulic steering.

In comparison with these steerings, fully electronic steering (fly by wire) has a number of advantages: A free choice of the steering wheel size; Not too large, which result in problems with large steering wheel movements and accompanying wear injuries for the driver; Not too small since this can give problems at precision driving, driving with gloves, too great difference relative the ordinary car and difficulty to get a good grip. The resistance in the steering wheel, the steering wheel force is chosen so that a slight resistance is obtained for instance by means of a bearing that is extra packed with grease, giving a friction or resistance stopping the steering wheel movement immediately at ended force influence from the driver. The emergency steering problem can be avoided by arranging an automatic brake that automatically locks the wheel when steering failure occur. A draw back is however the need to provide steering wheels of different size depending on the most frequent work condition and driver.

When it comes to the steering for trucks the demands on such a steering from an ergonomic point of view are others then those at cars and aeroplanes, respectively. In comparison with the other mentioned categories the steering wheel at lifting trucks is used constantly for relatively large steering movements during the entire time that the truck is used. The result of this is a risk for wear injuries for the person using the truck. The forces that at steering has to be exerted by the steering arm and hand may in themselves be kept small by the use of a fully electrical steering, but since the same movements have to be carried out many times there is still a great risk of wear injuries. There is also a risk for load injures since the driver may have to hold his arm or arms in almost exactly the same position for long times.

From US-A-5 181 173 a steering system for a lifting truck is known whereby the steering angle movement for the truck wheel or wheels in relation to the steering wheel movement at low speed is greater than at high speed with a continuous transition between the different gearings or translation as a function of the speed.

From US-A-5172 785 it is known to take for instance the age of the driver into account by changing gain and phase in the relationship between the angular movement of the wheels and the angular deflection of the steering wheel.

In view of the above problem the object of the invention is to provide a steering for trucks that minimize the risk of wear and load injuries resulting from steering the truck.

In accordance with the invention this object is solved by a steering comprising the features defined in claim 1.

The gearing in the low and high speed range may be comparatively uninfluenced by the speed or even be constant, while the gearing may change quickly with the speed in the intermediate range. In the extreme case one may consider having a comparatively abrupt transition between low and high speed ranges. The reason for this is the special conditions for lifting trucks. Frequently only two speed ranges are used namely the low for loading and unloading, and the high or maybe in reality full speed for the transport travels, respectively.

In the above way in particular the drivers spinning of the steering wheel at loading and unloading can be minimized without the travel of the truck with high speed becoming unsafe or result in internal oscillations in the system constituted of driver and steering system. Even if the difference in gearing between steering wheel and truck wheel at high speed and low speed, respectively, may be two to three times there is still a certain risk for wear injuries. This since it is not the question of eight hours of work one single day but may be a question of years or even decades.

In order therefor further to reduce the risk of injures and achieve an improved work environment for the driver, respectively, it is in accordance with a development of the invention further suggested that the steering system is provided with different reaction levels or expert levels, were for a more skilled or trained driver the required steering wheel movements are reduced further. At this probably the required steering wheel movements at high speed are most reduced. As the skill of the driver improves he can quite simply handle a steering with a higher gearing better and in this way consequently the movements can be made smaller. When it comes to the required steering wheel movements in the low speed range the movements here are already small due to the already high gearing why the improvement with a change is less than in the high speed range. There is also a lower limit for how small movements can be made.

For the different reaction levels preferably also the boundaries for high speed range and. low speed range to the intermediate range change. With the increasing skill of the driver, he may be permitted to have an increased speed in the highly sensitive low speed range for the steering, that is a low speed range that extends higher in speed. At the same time also the lower boundary for the high speed range can be changed. As is realized this changing of the lower intermediate range boundary towards a higher speed reduce a considerable amount of movements.

In order to eliminate the risk for oscillations the maximally possible speed for the steering of the wheel or wheels is limited, that is the steering speed is reduced. This limit may be different for different travel speeds, for instance based on the fact that oscillations more easily result at higher travel speeds.

The gearing of the steering can further be adapted to:

The individual skill and experience of the driver:
The actual work situation, for instance long travel distances in the high speed range, were one may prefer a low gearing or gain, which also may be preferable in areas with people around the truck;
The look or topography of the work location, for instance in narrow areas with many sharp directions changes, right angle turns with much load handling in racks as loading and unloading frequently in small areas require a frequent and repeated changing of the travel direction. At this type of work cycle it is frequently necessary to turn 180° with short travel distances and maximum steering movements;
Driving with work gloves, in some cases special gloves for work in deep freeze ware houses, which generally requires a lower gearing of the steering, since the driver will have a reduced precision in his movements and normally will drive with his hand on a spinner, that is a turning handle on the steering wheel;
Steering manner, for instance some drivers wants to use the spinner exclusively.

On the enclosed diagram an example of how the gearing or gain between steering wheel and wheels can vary with the speed is shown. The different curves correspond to different reaction levels or levels of skill were the skill level with the highest number correspond to the most skilled driver. At adaption one can instead of switching between different predefined curves set the inclination and level for high and low speed ranges individually as well as the speed boundaries for the connecting intermediate range. Also one can consider if desirable to have different curves at acceleration and braking, respectively.

The steering wheel may in principal be constituted by a generator. When the signal source is in the shape of a generator this can provide an analogous voltage and thereby current in the circuit. The voltage level or the direction of the current signifies the direction in which the wheel or wheels are to be steered and no separate means are needed for this. The generator delivers different voltages in relations to the angular speed of the steering wheel as an analogues signal. The different voltages are then processed in a microprocessor, that then dependent on the chosen control parameter deliver different output signals, voltages via a control transistor regulator to the steering motor. If maximum voltage is reached the angular speed of the steering motor and thus that of the steering wheel is limited by the characteristics of the motor. The steering motor can be constituted by a permanent magnet motor.

When the angular sensor or signal source of the steering wheel is constituted by a generator a certain if however small turning resistance in addition to the bearing resistance is obtained that simplify the movement control, in particular since electrical control of the resistance in the steering wheel is possible.

The steering wheel may alternatively include a pulse generator giving a comparatively large number of pulses for each steering wheel turn, which pulses may be used to control the steering angle of the wheel (-s). The number of control pulses delivered to the steering engine may equal the number of control pulses from the steering wheel while the adaption to different speeds can be obtained by varying the length of the pulses and thus the power delivered to the steering motor.

By in particular for a skilled driver increasing the steering gearing in the entire speed range of the truck it will be sufficient with very small movements for the steering so that a steering wheel with a small diameter can be used. The steering wheel may principally be constituted by a disc that is slightly recessed in relation to a surrounding hand support. When small movements suffice the driver can with one or several fingers turn the steering wheel or rather slide its circumference while the hand rests on the surrounding support. In this way a very good reference for the movement of the fingers in relation to the hand is obtained making use of the hands ability to perform small movements with great precision. For the execution of fast turning requiring less precision the steering wheel preferable is provided with a handle eccentrically mounted and extending upwards, a so called spinner. The spinner may also have a psychological meaning for drivers unused to electronic steering. Preferably the steering wheel as well as the surrounding support have such a surface structure that a good grip is established for the driver.

The steering system according to the invention makes the provision of differently sized steering wheels essentially unnecessary since it enables differing peripheral sensitivity for the steering wheel, which give the same difference in muscular movement that different steering wheel diameters give.

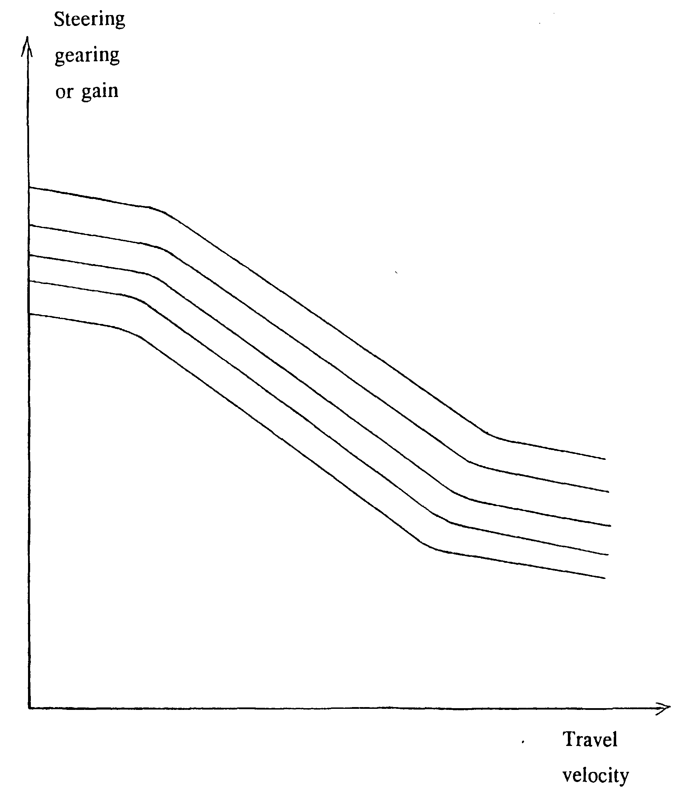

## Claims

1. Steering for lifting truck where the steering angle movement for the truck wheel or wheels in relation to the steering wheel movement at low speed is greater than at high speed with a continuous transition between the different gearings or translations as a function of the speed, **characterized in** that the given functional relationship between steering wheel deflection and angular movement of the wheel changes between different reaction levels, for instance corresponding to the skill of the user so that for instance a more skilled driver may have a generally higher gearing, the different reaction levels being constituted by different predefined curves and adaption being done by switching between the different curves.

2. Steering according to claim 1, **characterized in** that regardless of the reaction level there exist for the low speed range or for the high speed range an upper gain or gearing limit that is not surpassed at any of the control curves.

3. Steering according to any of the preceding claims, **characterized in** that the angular speed of the steering wheel and wheels is limited.

4. Steering according to claim 3, **characterized in** that the maximally permitted angular steering speed for the steered wheel varies with expert level so that a higher expert level allows a higher maximum angular steering speed.

5. Steering according to any of the preceding claims, **characterized in** that the steering wheel principally is constituted by a generator.

6. Steering according to any of the preceding claims, **characterized in** the different curves having essentially similar shapes.

## Patentansprüche

1. Lenkung für Gabelstapler, bei dem die Lenkwinkelbewegung für das Gabelstaplerrad oder die Gabelstaplerräder in Abhängigkeit von der Lenkradbewegung bei niedriger Geschwindigkeit größer als bei hoher Geschwindigkeit ist und ein kontinuierlicher Übergang zwischen den unterschiedlichen Übersetzungen oder Umsetzungen als eine Funktion der Geschwindigkeit vorhanden ist, **dadurch gekennzeichnet**, daß der gegebene funktionelle Zusammenhang zwischen der Lenkradauslenkung und der Winkelbewegung des Rades sich bei unterschiedlichen Reaktionsvermögensverhältnissen ändert, beispielsweise entsprechend der Fachkunde des Anwenders, so daß beispielweise ein fachkundiger Fahrer eine im allgemeinen höhere Übersetzung haben kann, wobei die unterschiedlichen Reaktionsvermögensverhältnisse von unterschiedlichen, vorbestimmten Kurven gebildet werden, und eine Anpassung durch eine Umschaltung unter den unterschiedlichen Kurven erfolgt.

2. Lenkung nach Anspruch 1, **dadurch gekennzeichnet**, daß unabhängig von dem Reaktionsvermögen für den unteren Geschwindigkeitsbereich oder für den hohen Geschwindigkeitsbereich eine obere Verstärkungsgrenze oder Übersetzungsgrenze vorhanden ist, welche von keiner der Steuerkurven überschritten wird.

3. Lenkung nach einem der vorangehenden Ansprüche, **dadurch gekennzeichnet**, daß die Winkelgeschwindigkeit des Lenkrads und der Räder begrenzt ist.

4. Lenkung nach Anspruch 3, **dadurch gekennzeichnet**, daß die maximal zulässige Winkellenkgeschwindigkeit für die gelenkten Räder sich mit der Fachkunde ändert, so daß ein besserer Fachmann den Betrieb bei einer höheren maximalen Winkellenkgeschwindigkeit durchführen kann.

5. Lenkung nach einem der vorangehenden Ansprüche, **dadurch gekennzeichnet**, daß das Lenkrad im allgemeinen von einem Generator gebildet wird.

6. Lenkung nach einem der vorangehenden Ansprüche, **dadurch gekennzeichnet**, daß die unterschiedlichen Kurven im wesentlichen ähnliche Formen haben.

## Revendications

1. Direction pour un chariot élévateur, dans laquelle le mouvement angulaire de braquage pour la ou les roue(s) du chariot, par rapport au mouvement du volant de direction, est plus grand à faible vitesse qu'à grande vitesse, avec un passage continu entre les différents engrènements ou translations en fonction de la vitesse, caractérisée en ce que la relation fonctionnelle donnée entre la déviation du volant de direction et le mouvement angulaire de la roue se modifie entre différents niveaux de réaction, qui correspondent par exemple à l'habileté de l'utilisateur si bien que, par exemple, un conducteur plus qualifié peut avoir un engrènement globalement plus élevé, les différents niveaux de réaction étant constitués par des courbes prédéfinies différentes et l'adaptation s'effectuant par permutation entre les différentes courbes.

2. Direction selon la revendication 1, caractérisée en ce que, indépendamment du niveau de réaction, il existe, pour la plage des faibles vitesses ou pour la plage des grandes vitesses, une limite supérieure de gain ou d'engrènement qui n'est dépassée, quelle que soit la courbe de commande.

3. Direction selon l'un des revendications précédentes, caractérisée en ce que la vitesse angulaire du volant de direction et des roues est limitée.

4. Direction selon la revendication 3, caractérisée en ce que la vitesse de braquage angulaire maximale autorisée pour la roue directrice varie en fonction du niveau d'adresse si bien qu'un niveau supérieur d'adresse permettra une vitesse de braquage angulaire maximale plus élevée.

5. Direction selon l'une quelconque des revendications précédentes, caractérisée en ce que le volant de direction est constitué, principalement, par un générateur.

6. Direction selon l'une quelconque des revendications précédentes, caractérisée en ce que les différentes courbes ont essentiellement des formes similaires.
